# EUROPEAN PATENT APPLICATION

(11) **EP 4 836 527 A1**
(43) Date of publication of application: **04.11.2026**
(21) Application number: 25751170.9
(22) Date of filing: 21.01.2025
(51) Int. Cl.: H04W 48/08

(54) **COMMUNICATION METHOD AND RELATED DEVICE**

(30) Priority: 07.02.2024 CN 202410175868
(71) Applicant: Huawei Technologies Co., Ltd., Shenzhen, Guangdong 518129 (CN)
(72) Inventor: HU, Dan, Shenzhen, Guangdong 518129 (CN); LIU, Ye, Shenzhen, Guangdong 518129 (CN)
(74) Representative: Huawei European IPR
(86) International application number: PCT/CN2025/073494
(87) International publication number: WO 2025/167568

(57) **Abstract**

Embodiments of this application provide a communication method and a related device. A terminal device sends first indication information to a network device. The first indication information indicates that the terminal device supports non-contiguousness between a first long term evolution LTE carrier and a first new radio NR carrier. The first LTE carrier and the first NR carrier are two carriers in intra-band EN-DC. The terminal device receives configuration information sent by the network device, and accesses a network according to a first rule and the configuration information. The configuration information is used to configure the first LTE carrier and the first NR carrier. The first rule includes: A nominal channel spacing is equal to a channel spacing between an LTE carrier and an NR carrier in intra-band non-contiguous EN-DC. The nominal channel spacing is a channel spacing between an LTE carrier and an NR carrier that are adjacent to each other in intra-band contiguous EN-DC. The first rule can enable a terminal device that only reports support for non-contiguousness between an LTE carrier and an NR carrier in intra-band EN-DC to access a network that only supports contiguousness between an LTE carrier and an NR carrier in intra-band EN-DC.

## Description

This application claims priority to Chinese Patent Application No. 202410175868.9, filed with the China National Intellectual Property Administration on February 7, 2024 and entitled "COMMUNICATION METHOD AND RELATED DEVICE", which is incorporated herein by reference in its entirety.

### TECHNICAL FIELD

This application relates to the communication field, and in particular, to a communication method and a related device.

### BACKGROUND

In a long term evolution (long term evolution, LTE) system, a terminal device supports simultaneous access to two network devices. This access mode is referred to as a dual connectivity (dual connectivity, DC) mode. One of the network devices is a primary network device, and the other network device is a secondary network device. In a development and evolution process of a wireless communication system, an operator deploys both a 5G new radio (new radio interface, NR) system and an LTE system, and a terminal device also supports simultaneous access to an LTE network device and an NR network device. Because LTE is also referred to as evolved universal terrestrial radio access (evolved universal terrestrial radio access, E-UTRA), this access mode may be referred to as evolved universal terrestrial radio access-new radio dual connectivity (E-UTRA NR dual connectivity, EN-DC). In the EN-DC mode, the LTE network device is a primary network device, and the NR network device is a secondary network device.

EN-DC combinations are classified into an intra-band (intra-band) EN-DC combination and an inter-band (inter-band) EN-DC combination. The intra-band EN-DC combination (intra-band EN-DC band combination) indicates that at least one LTE carrier and at least one NR carrier in a same band form a dual connectivity combination. In the case of the combination, the terminal device may report capability information to a network, and the capability information indicates contiguousness between an LTE carrier and an NR carrier that are adjacent to each other. For example, if the capability information reported by the terminal device indicates that the LTE carrier and the NR carrier that are adjacent to each other are non-contiguous (non-contiguous), non-contiguousness is supported. For another example, if the capability information reported by the terminal device indicates that the LTE carrier and the NR carrier that are adjacent to each other are non-contiguous (non-contiguous) and the LTE carrier and the NR carrier that are adjacent to each other are contiguous (contiguous) (which is alternatively understood as a case of "both"), both contiguousness and non-contiguousness are supported. For another example, if the terminal device does not report the capability information, it is considered by default that only contiguousness is supported.

However, for some special networks, only intra-band contiguousness between two carriers may be supported. If the terminal device reports that only non-contiguousness is supported, the terminal device cannot access the network. Therefore, normal use of the terminal device is affected.

### SUMMARY

This application provides a communication method and a related device. A first rule can enable a terminal device that only reports support for non-contiguousness between an LTE carrier and an NR carrier in intra-band EN-DC to access a network that only supports contiguousness between an LTE carrier and an NR carrier in intra-band EN-DC. The first rule is: A nominal channel spacing is equal to a channel spacing between an LTE carrier and an NR carrier in intra-band non-contiguous EN-DC.

A first aspect of this application provides a communication method. The method is performed by a terminal device, or the method is performed by a part of components (for example, a processor, a chip, or a chip system) in the terminal device, or the method may be implemented by a logical module or software that can implement all or a part of functions of the terminal device. In the first aspect and possible implementations thereof, an example in which the method is performed by the terminal device is used for description. In the method, the terminal device sends first indication information to a network device. The first indication information indicates that the terminal device supports non-contiguousness between a first long term evolution LTE carrier and a first new radio NR carrier, and the first LTE carrier and the first NR carrier are two carriers in intra-band EN-DC. The terminal device receives configuration information sent by the network device, and accesses a network according to a first rule and the configuration information. The configuration information is used to configure the first LTE carrier and the first NR carrier. The first rule includes: A nominal channel spacing is equal to a channel spacing between an LTE carrier and an NR carrier in intra-band non-contiguous EN-DC. The nominal channel spacing is a channel spacing between an LTE carrier and an NR carrier that are adjacent to each other in intra-band contiguous EN-DC.

Based on the foregoing solution, the first rule can enable a terminal device that only reports support for non-contiguousness between an LTE carrier and an NR carrier in intra-band EN-DC to access a network that only supports contiguousness between an LTE carrier and an NR carrier in intra-band EN-DC. The first rule is: A nominal channel spacing is equal to a channel spacing between an LTE carrier and an NR carrier in intra-band non-contiguous EN-DC. In other words, existing contiguousness is used as a special example of non-contiguousness. This also meets a current actual requirement, that is, a non-contiguous capability of the terminal device should support both a contiguous network and a non-contiguous network.

A second aspect of this application provides a communication method. The method is performed by a network device, or the method is performed by a part of components (for example, a processor, a chip, or a chip system) in the network device, or the method may be implemented by a logical module or software that can implement all or a part of functions of the network device. In the second aspect and possible implementations thereof, an example in which the method is performed by the network device is used for description. In the method, the network device receives first indication information sent by a terminal device. The first indication information indicates that the terminal device supports non-contiguousness between a first long term evolution LTE carrier and a first new radio NR carrier, and the first LTE carrier and the first NR carrier are two carriers in intra-band EN-DC. The network device sends configuration information according to a first rule. The configuration information is used to configure the first LTE carrier and the first NR carrier. The first rule includes: A nominal channel spacing is equal to a channel spacing between an LTE carrier and an NR carrier in intra-band non-contiguous EN-DC. The nominal channel spacing is a channel spacing between an LTE carrier and an NR carrier that are adjacent to each other in intra-band contiguous EN-DC.

Based on the foregoing solution, the first rule can enable a terminal device that only reports support for non-contiguousness between an LTE carrier and an NR carrier in intra-band EN-DC to access a network that only supports contiguousness between an LTE carrier and an NR carrier in intra-band EN-DC. The first rule is: A nominal channel spacing is equal to a channel spacing between an LTE carrier and an NR carrier in intra-band non-contiguous EN-DC. In other words, existing contiguousness is used as a special example of non-contiguousness. This also meets a current actual requirement, that is, a non-contiguous capability of the terminal device should support both a contiguous network and a non-contiguous network.

Optionally, in a possible implementation of the first aspect or the second aspect, the first indication information further indicates that the terminal device supports contiguousness between the first LTE carrier and the first NR carrier.

In this possible implementation, the method may be applied to not only a case in which the terminal device only supports non-contiguousness, but also a case in which the terminal device supports both contiguousness and non-contiguousness (which is alternatively understood as a case of "both"), so that the method can be applied to terminal devices with different capabilities, thereby expanding application scenario applicability.

Optionally, in a possible implementation of the first aspect or the second aspect, the first indication information further indicates a band identifier in an intra-band EN-DC scenario, a bandwidth level of the first LTE carrier, and a bandwidth level of the first NR carrier.

In this possible implementation, the first indication information may further specifically indicate the band identifier, the bandwidth level, and the like, to facilitate configuring, by the network device for the terminal device, the first LTE carrier and the first NR carrier that are more suitable for the terminal device.

Optionally, in a possible implementation of the first aspect or the second aspect, the configuration information specifically includes at least one of the following: frequency domain positions, quantities of resource blocks, or the like of the first LTE carrier and the first NR carrier.

In this possible implementation, the frequency domain positions, the quantities of resource blocks, or the like of the carriers are configured, so that the terminal device can determine configurations of the carriers, thereby implementing network access efficiency of the terminal device.

Optionally, in a possible implementation of the first aspect or the second aspect, the first LTE carrier and the first NR carrier include a downlink carrier and/or an uplink carrier.

This possible implementation may be applied to not only configuration or communication of the uplink carrier, but also configuration or communication of the downlink carrier, thereby expanding application scenario applicability.

A third aspect of this application provides a communication method. The method is performed by a terminal device, or the method is performed by a part of components (for example, a processor, a chip, or a chip system) in the terminal device, or the method may be implemented by a logical module or software that can implement all or a part of functions of the terminal device. In the third aspect and possible implementations thereof, an example in which the method is performed by the terminal device is used for description. In the method, the terminal device sends first indication information to a network device. The first indication information indicates that the terminal device supports non-contiguousness between a first long term evolution LTE carrier and a first new radio NR carrier, and the first LTE carrier and the first NR carrier are two carriers in intra-band EN-DC. The terminal device receives configuration information sent by the network device. The configuration information is used to configure the first LTE carrier and the first NR carrier. The terminal device accesses a network based on the configuration information and a second guard band. The second guard band is a guard band supported by the terminal device. The second guard band is less than a first guard band, and the first guard band is a predefined guard band corresponding to any channel bandwidth and a subcarrier spacing.

Based on the foregoing solution, a radio frequency indicator can be met by limiting the second guard band supported by the terminal device to being less than the first guard band defined in an existing standard.

Optionally, in a possible implementation of the third aspect, the foregoing step further includes: sending second indication information, where the second indication information indicates the second guard band supported by the terminal device.

In this possible implementation, the terminal device may report the second indication information, to cause the network device to determine the second guard band supported by the terminal device, thereby meeting the radio frequency indicator.

Optionally, in a possible implementation of the third aspect, a difference between the first guard band and the second guard band is at least one frequency domain unit, and the frequency domain unit includes any one of the following: a resource block, a raster, and a subcarrier spacing.

In this possible implementation, it may be understood that the at least one frequency domain unit is indirectly indicated. The network device may configure non-contiguousness of at least one frequency domain unit for the first LTE carrier and the first NR carrier, so that a non-contiguous capability supported by the terminal device is met, and the terminal device can normally access the network.

Optionally, in a possible implementation of the third aspect, the foregoing step further includes: sending third indication information, where the third indication information indicates the frequency domain unit.

In this possible implementation, it may be understood that the at least one frequency domain unit is directly indicated, and the network device may configure non-contiguousness of at least one frequency domain unit for the first LTE carrier and the first NR carrier, so that a non-contiguous capability supported by the terminal device is met, and the terminal device can normally access the network.

A fourth aspect of this application provides a communication method. The method is performed by a network device, or the method is performed by a part of components (for example, a processor, a chip, or a chip system) in the network device, or the method may be implemented by a logical module or software that can implement all or a part of functions of the network device. In the fourth aspect and possible implementations thereof, an example in which the method is performed by the network device is used for description. In the method, the network device receives first indication information sent by a terminal device. The first indication information indicates that the terminal device supports non-contiguousness between a first long term evolution LTE carrier and a first new radio NR carrier, and the first LTE carrier and the first NR carrier are two carriers in intra-band EN-DC. The network device receives second indication information sent by the terminal device. The second indication information indicates a second guard band supported by the terminal device. The second guard band is less than a first guard band, and the first guard band is a predefined guard band corresponding to any channel bandwidth and a subcarrier spacing. The network device sends configuration information to the terminal device. The configuration information is used to configure the first LTE carrier and the first NR carrier. The configuration information and the second guard band are used by the terminal device to access a network.

Based on the foregoing solution, the network device determines, by receiving the second indication information, that the second guard band supported by the terminal device is less than the first guard band defined in an existing standard, so that a radio frequency indicator can be met.

Optionally, in a possible implementation of the fourth aspect, the foregoing step further includes: receiving third indication information, where the third indication information indicates a frequency domain unit.

In this possible implementation, it may be understood that the network device may configure, by receiving the frequency domain unit directly indicated by the third indication information, non-contiguousness of at least one frequency domain unit for the first LTE carrier and the first NR carrier, so that a non-contiguous capability supported by the terminal device is met, and the terminal device can normally access the network.

Optionally, in a possible implementation of the third aspect or the fourth aspect, a difference between the first guard band and the second guard band is at least one frequency domain unit, and the frequency domain unit includes any one of the following: a resource block, a raster, and a subcarrier spacing.

In this possible implementation, it may be understood that the at least one frequency domain unit is indirectly indicated. The network device may configure non-contiguousness of at least one frequency domain unit for the first LTE carrier and the first NR carrier, so that a non-contiguous capability supported by the terminal device is met, and the terminal device can normally access the network.

Optionally, in a possible implementation of the third aspect or the fourth aspect, a frequency domain position of the first NR carrier is configured to be spaced apart from a frequency domain position of the first LTE carrier by at least one frequency domain unit. For example, the frequency domain position of the first NR carrier is configured to be offset by at least one frequency domain unit toward a side away from the frequency domain position of the first LTE carrier. For another example, the frequency domain position of the first LTE carrier is configured to be offset by at least one frequency domain unit toward a side away from the frequency domain position of the first NR carrier.

In this possible implementation, when the network device configures carriers for the terminal device, the first LTE carrier and the first NR carrier are spaced apart by at least one frequency domain unit (which is alternatively understood as that the frequency domain positions of the first LTE carrier and the first NR carrier are configured to be non-contiguous). In this way, a network side can configure, for the terminal device, that the terminal device supports non-contiguousness between an LTE carrier and an NR carrier in an intra-band EN-DC combination. For example, when configuring the first NR carrier, the network device moves the first NR carrier by at least one frequency domain unit toward a side away from the first LTE carrier. For another example, when configuring the first LTE carrier, the network device moves the LTE carrier by at least one frequency domain unit toward a side away from the first NR carrier.

Optionally, in a possible implementation of the third aspect or the fourth aspect, a resource block that exceeds a licensed spectrum boundary of an operator due to the at least one frequency domain unit is not configured or scheduled for transmission, or a resource block that is close to a licensed spectrum boundary of an operator is not configured or scheduled for transmission.

In this possible implementation, interference that does not meet a protocol or a regulation to a spectrum outside a boundary, which is caused by configuring the at least one frequency domain unit between the first LTE carrier and the first NR carrier, can be reduced.

Optionally, in a possible implementation of the third aspect or the fourth aspect, the first indication information further indicates a band identifier in an intra-band EN-DC scenario, a bandwidth level of the first LTE carrier, and a bandwidth level of the first NR carrier.

In this possible implementation, the first indication information may further specifically indicate the band identifier, the bandwidth level, and the like, to facilitate configuring, by the network device for the terminal device, the first LTE carrier and the first NR carrier that are more suitable for the terminal device.

Optionally, in a possible implementation of the third aspect or the fourth aspect, the configuration information specifically includes at least one of the following: frequency domain positions, quantities of resource blocks, or the like of the first LTE carrier and the first NR carrier.

In this possible implementation, the frequency domain positions, the quantities of resource blocks, or the like of the carriers are configured, so that the terminal device can determine configurations of the carriers, thereby implementing network access efficiency of the terminal device.

Optionally, in a possible implementation of the third aspect or the fourth aspect, the first LTE carrier and the first NR carrier include a downlink carrier and/or an uplink carrier.

This possible implementation may be applied to not only configuration or communication of the uplink carrier, but also configuration or communication of the downlink carrier, thereby expanding application scenario applicability.

A fifth aspect of this application provides a communication apparatus. The apparatus is a terminal device, or the apparatus is a part of components (for example, a processor, a chip, or a chip system) in the terminal device, or the apparatus may be a logical module or software that can implement all or a part of functions of the terminal device. The communication apparatus includes a transceiver unit and a processing unit.

The transceiver unit is configured to send first indication information. The first indication information indicates that the terminal device supports non-contiguousness between a first long term evolution LTE carrier and a first new radio NR carrier, and the first LTE carrier and the first NR carrier are two carriers in intra-band EN-DC.

The transceiver unit is further configured to receive configuration information. The configuration information is used to configure the first LTE carrier and the first NR carrier.

The processing unit is configured to access a network according to a first rule and the configuration information. The first rule includes: A nominal channel spacing is equal to a channel spacing between an LTE carrier and an NR carrier in intra-band non-contiguous EN-DC, and the nominal channel spacing is a channel spacing between an LTE carrier and an NR carrier that are adjacent to each other in intra-band contiguous EN-DC.

A sixth aspect of this application provides a communication apparatus. The apparatus is a network device, or the apparatus is a part of components (for example, a processor, a chip, or a chip system) in the network device, or the apparatus may be a logical module or software that can implement all or a part of functions of the network device. The communication apparatus includes a transceiver unit.

The transceiver unit is configured to receive first indication information. The first indication information indicates that a terminal device supports non-contiguousness between a first long term evolution LTE carrier and a first new radio NR carrier, and the first LTE carrier and the first NR carrier are two carriers in intra-band EN-DC.

The transceiver unit is further configured to send configuration information according to a first rule. The configuration information is used to configure the first LTE carrier and the first NR carrier. The first rule includes: A nominal channel spacing is equal to a channel spacing between an LTE carrier and an NR carrier in intra-band non-contiguous EN-DC. The nominal channel spacing is a channel spacing between an LTE carrier and an NR carrier that are adjacent to each other in intra-band contiguous EN-DC.

Optionally, in a possible implementation of the fifth aspect or the sixth aspect, the foregoing first indication information further indicates that the terminal device supports contiguousness between the first LTE carrier and the first NR carrier.

Optionally, in a possible implementation of the fifth aspect or the sixth aspect, the foregoing first indication information further indicates a band identifier in an intra-band EN-DC scenario, a bandwidth level of the first LTE carrier, and a bandwidth level of the first NR carrier.

Optionally, in a possible implementation of the fifth aspect or the sixth aspect, the foregoing configuration information specifically includes frequency domain positions and quantities of resource blocks of the first LTE carrier and the first NR carrier.

Optionally, in a possible implementation of the fifth aspect or the sixth aspect, the first LTE carrier and the first NR carrier include a downlink carrier and/or an uplink carrier.

A seventh aspect of this application provides a communication apparatus. The apparatus is a terminal device, or the apparatus is a part of components (for example, a processor, a chip, or a chip system) in the terminal device, or the apparatus may be a logical module or software that can implement all or a part of functions of the terminal device. The communication apparatus includes a transceiver unit and a processing unit.

The transceiver unit is configured to send first indication information. The first indication information indicates that the terminal device supports non-contiguousness between a first long term evolution LTE carrier and a first new radio NR carrier, and the first LTE carrier and the first NR carrier are two carriers in intra-band EN-DC.

The transceiver unit is further configured to receive configuration information. The configuration information is used to configure the first LTE carrier and the first NR carrier.

The processing unit is configured to access a network based on the configuration information and a second guard band. The second guard band is a guard band supported by the terminal device. The second guard band is less than a first guard band, and the first guard band is a predefined guard band corresponding to any channel bandwidth and a subcarrier spacing.

Optionally, in a possible implementation of the seventh aspect, the foregoing transceiver unit is further configured to send second indication information. The second indication information indicates the second guard band supported by the terminal device.

Optionally, in a possible implementation of the seventh aspect, the foregoing transceiver unit is further configured to send third indication information. The third indication information indicates a frequency domain unit.

An eighth aspect of this application provides a communication apparatus. The apparatus is a network device, or the apparatus is a part of components (for example, a processor, a chip, or a chip system) in the network device, or the apparatus may be a logical module or software that can implement all or a part of functions of the network device. The communication apparatus includes a transceiver unit.

The transceiver unit is configured to receive first indication information. The first indication information indicates that a terminal device supports non-contiguousness between a first long term evolution LTE carrier and a first new radio NR carrier, and the first LTE carrier and the first NR carrier are two carriers in intra-band EN-DC.

The transceiver unit is further configured to receive second indication information. The second indication information indicates a second guard band supported by the terminal device. The second guard band is less than a first guard band, and the first guard band is a predefined guard band corresponding to any channel bandwidth and a subcarrier spacing;

The transceiver unit is further configured to send configuration information. The configuration information is used to configure the first LTE carrier and the first NR carrier. The configuration information and the second guard band are used by the terminal device to access a network.

Optionally, in a possible implementation of the eighth aspect, the foregoing transceiver unit is further configured to receive third indication information. The third indication information indicates a frequency domain unit.

Optionally, in a possible implementation of the seventh aspect or the eighth aspect, a difference between the first guard band and the second guard band is at least one frequency domain unit, and the frequency domain unit includes any one of the following: a resource block, a raster, and a subcarrier spacing.

Optionally, in a possible implementation of the seventh aspect or the eighth aspect, a frequency domain position of the first NR carrier is configured to be spaced apart from a frequency domain position of the first LTE carrier by at least one frequency domain unit. For example, the frequency domain position of the first NR carrier is configured to be offset by at least one frequency domain unit toward a side away from the frequency domain position of the first LTE carrier. For another example, the frequency domain position of the first LTE carrier is configured to be offset by at least one frequency domain unit toward a side away from the frequency domain position of the first NR carrier.

Optionally, in a possible implementation of the seventh aspect or the eighth aspect, a resource block that exceeds a licensed spectrum boundary of an operator due to the at least one frequency domain unit is not configured or scheduled for transmission, or a resource block that is close to a licensed spectrum boundary of an operator is not configured or scheduled for transmission.

Optionally, in a possible implementation of the seventh aspect or the eighth aspect, the foregoing first indication information further indicates a band identifier in an intra-band EN-DC scenario, a bandwidth level of the first LTE carrier, and a bandwidth level of the first NR carrier.

Optionally, in a possible implementation of the seventh aspect or the eighth aspect, the foregoing configuration information specifically includes frequency domain positions and quantities of resource blocks of the first LTE carrier and the first NR carrier.

Optionally, in a possible implementation of the seventh aspect or the eighth aspect, the first LTE carrier and the first NR carrier include a downlink carrier and/or an uplink carrier.

A ninth aspect of this application provides a communication apparatus, including at least one processor. The at least one processor is coupled to at least one memory. The at least one memory is configured to store a program or instructions. The at least one processor is configured to execute the program or the instructions, to cause the apparatus to implement the method in any possible implementation of the first aspect, or implement the method in any possible implementation of the third aspect.

A tenth aspect of this application provides a communication apparatus, including at least one processor. The at least one processor is coupled to at least one memory. The at least one memory is configured to store a program or instructions. The at least one processor is configured to execute the program or the instructions, to cause the apparatus to implement the method in any one of the possible implementations of the second aspect, or implement the method in any one of the possible implementations of the fourth aspect.

An eleventh aspect of this application provides a communication apparatus, including at least one logic circuit and at least one input/output interface. The logic circuit is configured to perform the method in any one of the possible implementations of the first aspect, or perform the method in any one of the possible implementations of the third aspect.

A twelfth aspect of this application provides a communication apparatus, including at least one logic circuit and at least one input/output interface. The logic circuit is configured to perform the method in any one of the possible implementations of the second aspect, or perform the method in any one of the possible implementations of the fourth aspect.

A thirteenth aspect of this application provides a communication system. The communication system includes the communication apparatus in any one of the possible implementations of the fifth aspect and the communication apparatus in any one of the possible implementations of the sixth aspect, or includes the communication apparatus in any one of the possible implementations of the seventh aspect and the communication apparatus in any one of the possible implementations of the eighth aspect, or includes the communication apparatus in any one of the possible implementations of the ninth aspect and the communication apparatus in any one of the possible implementations of the tenth aspect, or includes the communication apparatus in any one of the possible implementations of the eleventh aspect and the communication apparatus in any one of the possible implementations of the twelfth aspect.

A fourteenth aspect of this application provides a computer-readable storage medium. The storage medium is configured to store one or more computer-executable instructions. When the computer-executable instructions are executed by a processor, the processor performs the method according to any possible implementation in any one of the first aspect to the fourth aspect.

A fifteenth aspect of this application provides a computer program product (also referred to as a computer program). When the computer program in the computer program product is executed by a processor, the processor performs the method according to any possible implementation in any one of the first aspect to the fourth aspect.

A sixteenth aspect of this application provides a chip or a chip system. The chip or the chip system includes at least one processor configured to support a communication apparatus in implementing the method according to any possible implementation in any one of the first aspect to the fourth aspect.

In a possible design, the chip system may further include at least one memory configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

For technical effects brought by any design in the fifth aspect to the sixteenth aspect, refer to the technical effects brought by different designs in the first aspect to the fourth aspect. Details are not described herein again.

### BRIEF DESCRIPTION OF DRAWINGS

FIG. 1A is a diagram of a communication system according to this application;
FIG. 1B is another diagram of a communication system according to this application;
FIG. 1C is another diagram of a communication system according to this application;
FIG. 2 is another diagram of a communication system according to this application;
FIG. 3 is a schematic flowchart of a communication method according to this application;
FIG. 4 is another schematic flowchart of a communication method according to this application;
FIG. 5 is an example diagram of a channel spacing according to this application;
FIG. 6 is an example diagram of an extra frequency domain unit according to this application; and
FIG. 7 to FIG. 10 are several diagrams of communication apparatuses according to this application.

### DESCRIPTION OF EMBODIMENTS

The following clearly and completely describes the technical solutions in embodiments of this application with reference to the accompanying drawings in embodiments of this application.

First, a part of terms in embodiments of this application are explained and described, to facilitate understanding of a person skilled in the art.

### 1. Configuration and pre-configuration

In this application, both the configuration and the pre-configuration are used. The configuration means that a network device/a server sends configuration information of some parameters or values of the parameters to a terminal by using a message or signaling, so that the terminal determines, based on the values or the information, a communication parameter or a resource used during transmission. Similar to the configuration, the pre-configuration may be parameter information or a parameter value negotiated by a network device/a server with a terminal device in advance, or may be parameter information or a parameter value used by a base station/a network device or a terminal device as specified in a standard protocol, or may be parameter information or a parameter value pre-stored in a base station/a server or a terminal device. This is not limited in this application.

Further, the values and parameters may be changed or updated.

2. In this application, "indicating" may include directly indicating and indirectly indicating. When a piece of indication information is described as indicating A, it may be understood that the indication information carries A, directly indicates A, or indirectly indicates A.

In this application, information indicated by the indication information is referred to as to-be-indicated information. In a specific implementation process, the to-be-indicated information is indicated in a plurality of manners. For example, the to-be-indicated information may be directly indicated, for example, indicated by using the to-be-indicated information or an index of the to-be-indicated information. Alternatively, the to-be-indicated information may be indirectly indicated by indicating other information, where there is an association relationship between the other information and the to-be-indicated information. Alternatively, only a part of the to-be-indicated information may be indicated, and another part of the to-be-indicated information is known or agreed in advance. For example, specific information may be indicated by using a pre-agreed (for example, specified in a protocol) arrangement sequence of each piece of information, so as to reduce indication overheads to some extent.

The to-be-indicated information may be sent together as a whole, or may be divided into multiple pieces of sub-information and sent separately. In addition, the sending periods and/or sending moments of these pieces of sub-information may be the same or different. A specific sending method is not limited in this application. The sending periods and/or sending moments of these pieces of sub-information may be predefined, for example, predefined by a protocol, or may be configured by a transmit end device that sends configuration information to a receive end device. The configuration information may include, for example, but not limited to one or a combination of at least two of RRC signaling, medium access control (medium access control, MAC) layer signaling, and physical layer signaling. The MAC layer signaling includes, for example, a MAC CE, and the physical layer signaling includes, for example, downlink control information (downlink control information, DCI).

3. "Sending" and "receiving" in embodiments of this application indicate signal transfer directions. In this application, that an entity A sends information to an entity B may be that A directly sends the information to B, or may be that A indirectly sends the information to B through another entity. Similarly, that the entity B receives information from the entity A may be that the entity B directly receives the information sent by the entity A, or may be that the entity B indirectly receives the information sent by the entity A through another entity. The entity A and the entity B herein each may be a RAN node or a terminal, or may be a module in a RAN node or a terminal. Information sending and receiving may be information exchange between a RAN node and a terminal, for example, information exchange between a base station and a terminal. Information sending and receiving may alternatively be information exchange between two RAN nodes, for example, information exchange between a CU and a DU. Information sending and receiving may alternatively be information exchange between different modules in an apparatus, for example, information exchange between a chip in a terminal and another module in the terminal, or information exchange between a chip in a base station and another module in the base station. "Sending" may also be understood as "output" of a chip interface. For example, a baseband chip outputs information to a radio frequency chip. For another example, "sending" may also be understood as that a baseband part inside a device outputs information to a radio frequency part.

4. The terms "system" and "network" in embodiments of this application may be used interchangeably. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof refers to any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

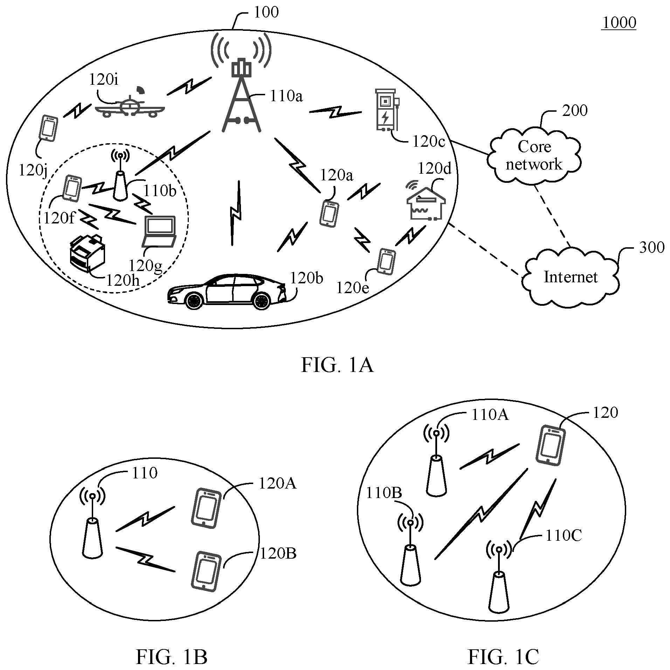

FIG. 1A is a diagram of an architecture of a communication system 1000 applied in an embodiment of this application. As shown in FIG. 1A, the communication system includes a radio access network (radio access network, RAN) 100 and a core network 200. Optionally, the communication system 1000 may further include an internet 300. The RAN 100 includes at least one RAN node (for example, 110a and 110b in FIG. 1A, collectively referred to as 110), and may further include at least one terminal (for example, 120a to 120j in FIG. 1A, collectively referred to as 120). The RAN 100 may further include another RAN node, for example, a wireless relay device and/or a wireless backhaul device (not shown in FIG. 1A). The terminal 120 is connected to the RAN node 110 in a wireless manner, and the RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. Terminals may be connected to each other in a wired or wireless manner, and RAN nodes may be connected to each other in a wired or wireless manner.

The RAN 100 may be an evolved universal terrestrial radio access (evolved universal terrestrial radio access, E-UTRA) system, an NR system, or a future radio access system defined in 3GPP. The RAN 100 may alternatively include the foregoing two or more different radio access systems. The RAN 100 may alternatively be an open RAN (open RAN, O-RAN).

The RAN node, also referred to as a radio access network device, a RAN entity, or an access node, is configured to help a terminal access a communication system in a wireless manner. In an application scenario, the RAN node may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, or a base station in a future mobile communication system. The RAN node may be a macro base station (for example, 110a in FIG. 1A), may be a micro base station or an indoor base station (for example, 110b in FIG. 1A), or may be a relay node or a donor node.

In another application scenario, a plurality of RAN nodes may cooperate to help a terminal implement radio access, and different RAN nodes separately implement a part of functions of a base station. For example, the RAN node may be a central unit (central unit, CU), a distributed unit (distributed unit, DU), or a radio unit (radio unit, RU). The CU herein completes functions of a radio resource control protocol layer and a packet data convergence protocol (packet data convergence protocol, PDCP) layer of the base station, and may further complete functions of a service data adaptation protocol (service data adaptation protocol, SDAP) layer. The DU completes functions of a radio link control layer and a medium access control (medium access control, MAC) layer of the base station, and may further complete a part or all of functions of a physical layer. For specific descriptions of the foregoing protocol layers, refer to related technical specifications in 3GPP. The RU may be configured to implement a transceiver function of a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be further classified into two types of RAN nodes at a CU-control plane and a CU-user plane.

In different systems, the RAN node may have a different name. For example, in an O-RAN system, a CU may be referred to as an open CU (open CU, O-CU), a DU may be referred to as an open DU (open DU, O-DU), and an RU may be referred to as an open RU (open RU, O-RU). The RAN node in embodiments of this application may be implemented by using a software module, a hardware module, or a combination of the software module and the hardware module. For example, the RAN node may be a server loaded with a corresponding software module. A specific technology and a specific device form that are used by the RAN node are not limited in embodiments of this application.

In addition, the RAN node may also be referred to as a network device, and the network device is an apparatus that is deployed in a radio access network and that provides a wireless communication function for a terminal device. The network device may include various forms of macro base stations, micro base stations (also referred to as small cells), relay stations, access points, and the like. In systems using different radio access technologies, names of network devices may be different, for example, an eNB or an eNodeB (Evolved NodeB) in long term evolution (Long Term Evolution, LTE). The network device may alternatively be a radio controller in a cloud radio access network (Cloud Radio Access Network, CRAN) scenario. Alternatively, the network device may be a base station device in a future 5G network or a network device in a future evolved PLMN network. The network device may alternatively be a wearable device or a vehicle-mounted device. The network device may alternatively be a transmission reception point (Transmission and Reception Point, TRP). In addition, in a network structure, the network device may include a central unit (central unit, CU) node, a distributed unit (distributed unit, DU) node, or a RAN device including a CU node and a DU node. For ease of description, the following is described by using an example in which the base station is used as a RAN node.

A terminal is a device having a wireless transceiver function, and may send a signal to the base station, or receive a signal from the base station. The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, autonomous driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1A may be configured as a mobile base station, and for a terminal 120j accessing the radio access network 100 through 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b in FIG. 1A may each be referred to as a communication apparatus having a base station function, and 120a to 120j in FIG. 1A may each be referred to as a communication apparatus having a terminal function.

Communication between the base station and the terminal, between the base station and the base station, or between the terminal and the terminal may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum above 6 GHz, or may be simultaneously performed by using the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. The function of the terminal may alternatively be performed by a module (for example, a chip or a modem) in the terminal, or may be performed by an apparatus including the function of the terminal.

It may be understood that the RAN 100 is already described above, and includes at least one RAN node (for example, 110a and 110b in FIG. 1A, collectively referred to as 110), and may further include at least one terminal (for example, 120a to 120j in FIG. 1A, collectively referred to as 120).

In a possible implementation, the communication system shown in FIG. 1A may alternatively be shown in FIG. 1B, that is, include one RAN node 110 and a plurality of terminals (for example, 120A and 120B in FIG. 1B). In this case, a single RAN node may transmit data or control signaling to one or more terminals.

In another possible implementation, the communication system shown in FIG. 1A may alternatively be shown in FIG. 1C, that is, include a plurality of RAN nodes (for example, 110A, 110B, and 110C in FIG. 1C) 110 and one terminal 120. In this case, a plurality of RAN nodes may also simultaneously transmit data or control signaling for a single terminal.

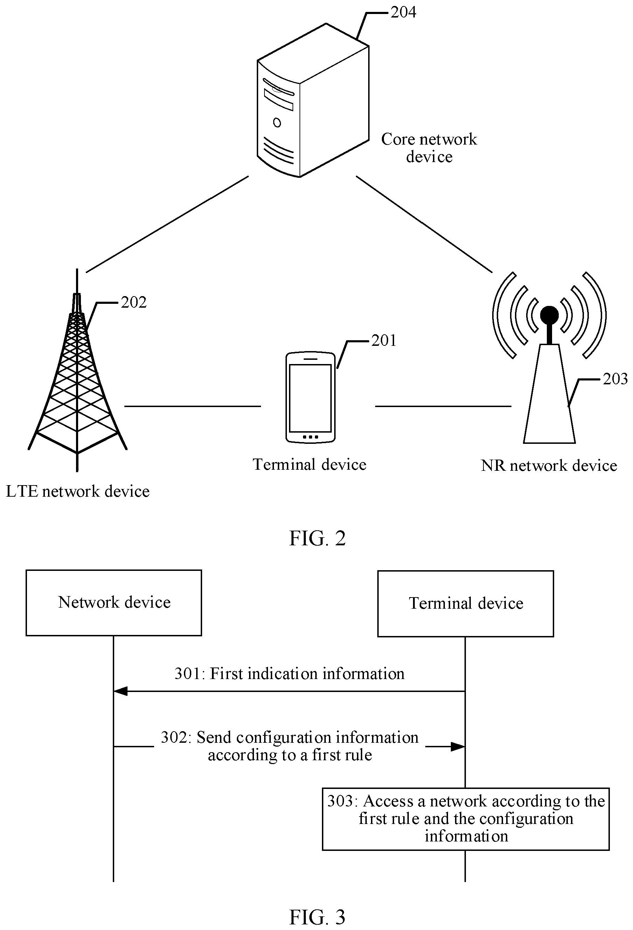

Evolved universal terrestrial radio access-new radio dual connectivity (E-UTRA-NR dual connectivity, EN-DC) is a special scenario in the communication system shown in FIG. 1C. EN-DC refers to a scenario in which a terminal device accesses both an LTE network device and an NR network device. Generally, the terminal device performs dual connectivity by using the LTE network device as a primary network device and the NR network device as a secondary network device. An example of an EN-DC communication system may be shown in FIG. 2. The communication system includes a terminal device 201, an LTE network device 202, an NR network device 203, and a core network device 204.

The terminal device 201 is separately connected to the LTE network device 202 and the NR network device 203. The LTE network device 202 and the NR network device 203 are separately connected to the core network device 204. Both the LTE network device 202 and the NR network device 203 provide air interface transmission resources for data transmission between the terminal device 201 and the core network device 204. In other words, a dual connectivity deployment scenario shown in FIG. 2 is formed. In this case, the LTE network device 202 may be, for example, the LTE eNB described above, the NR network device 203 may be, for example, the gNB described above, and the core network device 204 may be, for example, a 4G core network device or a 5G core network device.

Optionally, there is a control plane connection and a data plane connection between the LTE network device 202 and the core network device 204, and there is a data plane connection between the NR network device 203 and the core network device 204. For example, if there is an X2 interface between the LTE network device 202 and the NR network device 203, there is at least a control plane connection, and there may be a user plane connection. If there is an S1 interface between the LTE network device 202 and the core network device 204, there is at least a control plane connection, and there may be a user plane connection. If there is an S1-U interface between the NR network device 203 and the core network device 204, there may be a user plane connection.

In addition, EN-DC includes intra-band (intra-band) EN-DC and inter-band (inter-band) EN-DC based on different bands (bands). Intra-band EN-DC means that an operating carrier used for data transmission between the terminal device and the LTE network device and an operating carrier used for data transmission between the terminal device and the NR network device are in a same band (that is, the LTE carrier and the NR carrier correspond to a same band number). For example, the LTE carrier is in a band 48, and the NR carrier is in a band n48. Inter-band EN-DC means that an operating carrier used for data transmission between the terminal device and the LTE network device and an operating carrier used for data transmission between the terminal device and the NR network device are in different bands (that is, the LTE carrier and the NR carrier respectively correspond to different band numbers). For example, the LTE carrier is in a band 48, and the NR carrier is in a band n41.

Further, intra-band EN-DC further includes, based on contiguousness of carriers, intra-band non-contiguous EN-DC (intra-band non-contiguous EN-DC) and intra-band contiguous EN-DC (intra-band contiguous EN-DC). Intra-band non-contiguous EN-DC may also be referred to as intra-band discontiguous EN-DC, non-contiguous intra-band EN-DC, discontiguous intra-band EN-DC, or the like. Intra-band contiguous EN-DC may also be referred to as contiguous intra-band EN-DC or the like.

In an existing mechanism, the terminal device may report capability information to a network. The capability information indicates contiguousness between an LTE carrier and an NR carrier that are adjacent to each other in an intra-band EN-DC combination. For example, if the capability information reported by the terminal device indicates that the LTE carrier and the NR carrier that are adjacent to each other are non-contiguous (non-contiguous), non-contiguousness is supported. For another example, if the capability information reported by the terminal device indicates that the LTE carrier and the NR carrier that are adjacent to each other are non-contiguous (non-contiguous) and the LTE carrier and the NR carrier that are adjacent to each other are contiguous (contiguous) (which is alternatively understood as a case of "both"), both contiguousness and non-contiguousness are supported. For another example, if the terminal device does not report the capability information, it is considered by default that only contiguousness is supported.

However, for some special networks (for example, a network in South Africa), only intra-band contiguousness between two carriers may be supported. If the terminal device reports that only non-contiguousness is supported, the terminal device cannot access the network. Therefore, normal use of the terminal device is affected.

Specifically, the terminal device reports that only non-contiguousness is supported. A special network only supports contiguousness. Therefore, the network side delivers a contiguous carrier configuration to the terminal device. The terminal device checks a channel spacing between the LTE carrier and the NR carrier according to an existing rule, and determines, if the channel spacing is equal to a nominal channel spacing, that intra-band contiguous EN-DC is used. In addition, it is found that carrier contiguousness configured on a network side conflicts with a non-contiguous capability supported by the terminal device. As a result, the terminal device cannot access the network.

To resolve the foregoing technical problem, embodiments of this application provide two ideas.

In a first idea, according to a first rule, a terminal device that only supports an intra-band non-contiguous EN-DC combination can access a network that only supports an intra-band EN-DC combination with two contiguous carriers. The first rule is: A nominal channel spacing is equal to a channel spacing between an LTE carrier and an NR carrier in intra-band non-contiguous EN-DC. That is, contiguousness is used as a special example of non-contiguousness. This also meets a current actual requirement, that is, a non-contiguous capability of the terminal device should support both a contiguous network and a non-contiguous network.

In a second idea, when the network side configures carriers for the terminal device, the LTE carrier and the NR carrier are spaced apart by at least one frequency domain unit (which is alternatively understood as that frequency domain positions of the first LTE carrier and the first NR carrier are configured to be non-contiguous). In this way, the network side can configure, for the terminal device, that the terminal device supports non-contiguousness between an LTE carrier and an NR carrier in an intra-band EN-DC combination. For example, when configuring the NR carrier, the network side moves the NR carrier by at least one frequency domain unit toward a side away from the LTE carrier. For another example, when configuring the LTE carrier, the network side moves the LTE carrier by at least one frequency domain unit toward a side away from the NR carrier.

The first idea is first described below. FIG. 3 is a schematic flowchart of a communication method according to an embodiment of this application. The method may include step 301 to step 303. Step 301 to step 303 may be performed by a communication apparatus, or may be performed by a part of components (for example, a processor, a chip, or a chip system) in the communication apparatus, or may be implemented by a logical module or software that can implement all or a part of functions of the communication apparatus. An example in which the method is performed by the communication apparatus is used for description below. Processing performed by a single execution entity in step 301 to step 303 may alternatively be divided to be performed by a plurality of execution entities. These execution entities may be logically and/or physically separated. For example, when the communication apparatus is a network device, for example, a base station, processing performed by the communication apparatus may be divided to be performed by at least one of a CU, a DU, and an RU. Step 301 to step 303 are described in detail below. The communication apparatus may include the terminal device and/or the network device in FIG. 1A to FIG. 2. In this embodiment of this application, only an example in which the network device is a primary network device (for example, the LTE network device in FIG. 2) of the terminal device is used for description. It may be understood that in actual application, the network device may alternatively be a secondary network device (for example, the NR network device in FIG. 2) of the terminal device, a core network device (for example, the core network device in FIG. 2), or the like. This is not specifically limited herein.

Step 301: The terminal device sends first indication information to the network device.

The terminal device sends the first indication information to the network device. Correspondingly, the network device receives the first indication information sent by the terminal device. The first indication information indicates that the terminal device supports non-contiguousness (non-contiguousness) between a first LTE carrier and a first NR carrier. The first LTE carrier and the first NR carrier are two carriers in intra-band EN-DC. It can be learned from the foregoing descriptions that the first LTE carrier and the first NR carrier in intra-band EN-DC correspond to a same band (or band number).

It should be noted that transmission between the network device and the terminal device in embodiments of this application (including the embodiment shown in FIG. 3 and subsequent embodiments) may be transmission between a part of components (for example, a processor, a chip, or a chip system) in the network device and a part of components (for example, a processor, a chip, or a chip system) in the terminal device, or the like. Further, "sending" may also be understood as "output" of a chip interface. For example, a baseband chip outputs information to a radio frequency chip. For another example, "sending" may also be understood as that a baseband part inside a device outputs information to a radio frequency part.

This step may also be understood as a process in which the terminal device reports capability information. For example, the first indication information may be carried in a multi-access network technology dual-connectivity parameter (Multi-RAT Dual Connectivity-Parameters, MRDC-Parameters) intraBandENDC-Support and/or intraBandENDC-Support-UL. This is not specifically limited herein.

Optionally, the first indication information may further indicate that the terminal device supports contiguousness (contiguousness) between the first LTE carrier and the first NR carrier. This case may also be understood as that the first indication information indicates that the terminal device supports contiguousness and non-contiguousness (which is alternatively understood as a case of "both").

Further, the first indication information may further indicate at least one of the following: a band identifier (or a band number) in an intra-band EN-DC scenario, a bandwidth level of the first LTE carrier, a bandwidth level of the first NR carrier, and the like. The bandwidth level indicates a quantity of contiguous carriers in an LTE or NR band. In addition, the first LTE carrier includes an LTE uplink carrier and/or an LTE downlink carrier, and the first NR carrier includes an NR uplink carrier and/or an NR downlink carrier. Certainly, in actual application, the bandwidth level of an uplink band may not be reported. For example, the bandwidth level of the LTE uplink carrier may not be reported. For another example, the NR uplink carrier may not be reported.

It may be understood that this step may be that the terminal device actively performs reporting, or may be that the terminal device passively performs reporting based on a query of the network device. This is not specifically limited herein.

Step 302: The network device sends configuration information to the terminal device according to a first rule.

The network device sends the configuration information to the terminal device according to the first rule. Correspondingly, the terminal device receives the configuration information sent by the network device. The configuration information is used to configure the first LTE carrier and the first NR carrier.

The first rule includes: A nominal channel spacing is equal to a channel spacing (which may also be referred to as a center frequency) between an LTE carrier and an NR carrier in intra-band non-contiguous EN-DC (which is alternatively described as follows: A channel spacing between an LTE carrier and an NR carrier in intra-band non-contiguous EN-DC is equal to a nominal channel spacing). The nominal channel spacing (nominal channel spacing) is a channel spacing between an LTE carrier and an NR carrier that are adjacent to each other in intra-band contiguous EN-DC. Alternatively, the first rule includes: A channel spacing of an LTE carrier and an NR carrier in intra-band non-contiguous EN-DC is greater than or equal to a nominal channel spacing (which is alternatively described as follows: A channel spacing between an LTE carrier and an NR carrier in intra-band non-contiguous EN-DC is greater than or equal to a nominal channel spacing). That is, contiguousness is used as a special example of non-contiguousness.

In addition, there are a plurality of cases below for the nominal channel spacing.
1. For a band that uses a 100 kilohertz (kHz) channel raster: $Nominal channel spacing = \left({BW}_{E - UTRA _ Channel}+{BW}_{NR _ Channel}\right) / 2 .$
2. For a band that uses a 15 kHz channel raster: $Nominal channel spacing = \left({BW}_{E - UTRA _ Channel}+{BW}_{NR _ Channel}\right) / 2 + \left\{-5 kHz, 0 kHz, 5 kHz\right\} Δ {F}_{Raster} = 15 k Hz ;$ $Nominal channel spacing = \left({BW}_{E - UTRA _ Channel}+{BW}_{NR _ Channel}\right) / 2 + \left\{-10 kHz, 0 kHz, 10 kHz\right\} Δ {F}_{Raster} = 30 k Hz ;$ *BW*_{*E-UTRA*_*Channel*} represents a bandwidth of an LTE channel, and *BW*_{*NR*_*Channel*} represents a bandwidth of an NR channel. For a band below 3 gigahertz (GHz) that uses a 15 kHz channel raster: Δ*F_{Raster}* = *I* × Δ*F*_{*G*lobal}, *I* ∈ {3, 6}, and Δ*F*_{*G*lobal} *=* 5 *kHz* ; and for a band above 3 gigahertz (GHz) that uses a 15 kHz channel raster: Δ*F_{Rasre}, = I* × Δ*F*_{*G*lobal}, *I* ∈ {1,2}, and Δ*F*_{*G*lobal} = 15 k*H*z.

Optionally, the foregoing configuration information may specifically include at least one of the following: frequency domain positions, quantities of resource blocks, or the like of the first LTE carrier and the first NR carrier.

Step 303: The terminal device accesses a network according to the first rule and the configuration information.

After obtaining the configuration information, the terminal device may access the network according to the first rule and the configuration information.

Optionally, after receiving the configuration information, the terminal device checks the nominal channel spacing and the channel spacing between the first LTE carrier and the first NR carrier of the terminal device. The first rule includes: A nominal channel spacing is equal to a channel spacing between an LTE carrier and an NR carrier in intra-band non-contiguous EN-DC, or a channel spacing between an LTE carrier and an NR carrier in intra-band non-contiguous EN-DC is greater than or equal to a nominal channel spacing. If the channel spacing between the first LTE carrier and the first NR carrier is equal to the nominal channel spacing, the terminal device determines, according to the first rule, that the configuration information delivered by the network device meets a non-contiguous capability supported by the terminal device, so that the terminal device accesses the network.

Accessing the network in this embodiment of this application may be understood as that the terminal device may perform wireless communication through the network. For example, accessing the network includes: The terminal device establishes a connection to the primary network device. For another example, accessing the network includes: The terminal device establishes a connection to the secondary network device. This is not specifically limited herein.

In this embodiment of this application, the first rule can enable a terminal device that only reports support for non-contiguousness between an LTE carrier and an NR carrier in intra-band EN-DC to access a network that only supports contiguousness between an LTE carrier and an NR carrier in intra-band EN-DC. The first rule is: A nominal channel spacing is equal to a channel spacing between an LTE carrier and an NR carrier in intra-band non-contiguous EN-DC. That is, contiguousness is used as a special example of non-contiguousness. This also meets a current actual requirement, that is, a non-contiguous capability of the terminal device should support both a contiguous network and a non-contiguous network.

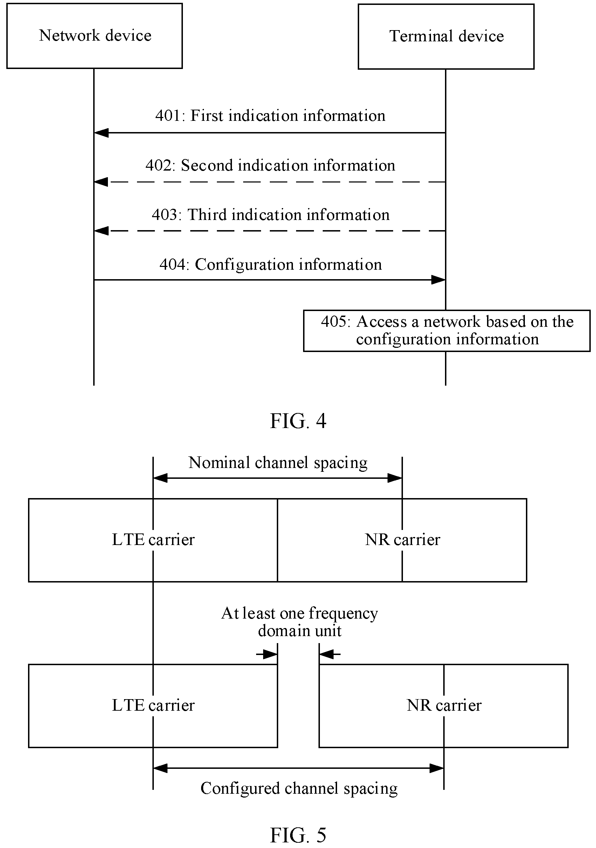

The second idea is described below. FIG. 4 is a schematic flowchart of a communication method according to an embodiment of this application. The method may include step 401 to step 404. Step 401 to step 404 may be performed by a communication apparatus, or may be performed by a part of components (for example, a processor, a chip, or a chip system) in the communication apparatus, or may be implemented by a logical module or software that can implement all or a part of functions of the communication apparatus. An example in which the method is performed by the communication apparatus is used for description below. Processing performed by a single execution entity in step 401 to step 404 may alternatively be divided to be performed by a plurality of execution entities. These execution entities may be logically and/or physically separated. For example, when the communication apparatus is a network device, for example, a base station, processing performed by the communication apparatus may be divided to be performed by at least one of a CU, a DU, and an RU. Step 401 to step 404 are described in detail below. The communication apparatus may include the terminal device and/or the network device in FIG. 1A to FIG. 2. In this embodiment of this application, only an example in which the network device is a primary network device (for example, the LTE network device in FIG. 2) of the terminal device is used for description. It may be understood that in actual application, the network device may alternatively be a secondary network device (for example, the NR network device in FIG. 2) of the terminal device, a core network device (for example, the core network device in FIG. 2), or the like. This is not specifically limited herein.

Step 401: The terminal device sends first indication information to the network device.

For step 401 in this embodiment, refer to the descriptions of step 301 in the embodiment shown in FIG. 3. Details are not described herein again.

Step 402: The terminal device sends second indication information to the network device. This step is optional.

Optionally, the terminal device sends the second indication information to the network device. Correspondingly, the network device receives the second indication information sent by the terminal device. The second indication information indicates a second guard band supported by the terminal device. The second guard band is less than a first guard band, and the first guard band is a predefined guard band corresponding to any channel bandwidth and a subcarrier spacing.

A guard band (for example, the first guard band or the second guard band) in embodiments of this application may be understood as a guard band (Guard Band), and the guard band (Guard Band) is a frequency range reserved in a communication system to prevent mutual interference between signals of different frequencies. Alternatively, the guard band may be understood as a spacing between bands, and the spacing is not used for transmission, but is a guard band that facilitates demodulation.

For example, the predefined first guard band is shown in Table 1.

**Table 1**

| **SCS (kHz)** | **3 MHz** | **5 MHz** | **10 MHz** | **15 MHz** | **20 MHz** | **25 MHz** | **30 MHz** | **35 MHz** | **40 MHz** | **45 MHz** | **50 MHz** | **60 MHz** | **70 MHz** | **80 MHz** | **90 MHz** | **100 MHz** |
|---|---|---|---|---|---|---|---|---|---|---|---|---|---|---|---|---|
| 15 | 142.5 | 242.5 | 312.5 | 382.5 | 452.5 | 522.5 | 592.5 | 572.5 | 552.5 | 712.5 | 692.5 | N/A | N/A | N/A | N/A | N/A |
| 30 | N/A | 505 | 665 | 645 | 805 | 785 | 945 | 925 | 905 | 1065 | 1045 | 825 | 965 | 925 | 885 | 845 |
| 60 | N/A | N/A | 1010 | 990 | 1330 | 1310 | 1290 | 1630 | 1610 | 1590 | 1570 | 1530 | 1490 | 1450 | 1410 | 1370 |

N/A indicates that a predefined guard band (unit: kHz) corresponding to a channel bandwidth and a subcarrier spacing of each UE is not applicable.

For example, a difference between the second guard band reported by the terminal device and the first guard band defined in a standard is one raster (for example, 100 kHz).

This step is a case of the second idea. To meet a radio frequency indicator, a second guard band of a special example is defined. For example, the terminal device may report a capability of supporting a smaller guard band (that is, the second guard band supported by the terminal device is less than the first guard band).

Further, a difference between the first guard band and the second guard band is at least one frequency domain unit.

The frequency domain unit in embodiments of this application is used to describe a distance or a position in frequency domain. The frequency domain unit may also be referred to as a gap, a spacing, a unit distance, a unit granularity, or the like. The frequency domain unit may include any one of a resource block (resource block, RB), a raster (raster or grid), a subcarrier spacing (subcarrier spacing, SCS), or the like.

Step 403: The terminal device sends third indication information to the network device. This step is optional.

Optionally, the terminal device sends the third indication information to the network device. Correspondingly, the network device receives the third indication information sent by the terminal device. The third indication information indicates the frequency domain unit. The third indication information may also be understood as indicating, to the network device, that a spacing granularity between an LTE carrier and an NR carrier needs to be set, or may be understood as that the network device may determine, based on the third indication information reported by the terminal device, a unit distance for moving a carrier.

For example, a frequency domain unit reported by the terminal device is one RB, and when setting the NR carrier, the network device moves the NR carrier by one RB in a direction away from the LTE carrier. Alternatively, when setting the LTE carrier, the network device moves the LTE carrier by one RB in a direction away from the NR carrier. For another example, the frequency domain unit reported by the terminal device is one subcarrier, and when setting the NR carrier, the network device may move the NR carrier by one subcarrier in a direction away from the LTE carrier. Alternatively, when setting the LTE carrier, the network device moves the LTE carrier by one subcarrier in a direction away from the NR carrier.

Step 404: The network device sends configuration information to the terminal device.

The network device determines the configuration information, and sends the configuration information to the terminal device. Correspondingly, the terminal device receives the configuration information sent by the network device. The configuration information is used to configure a first LTE carrier and a first NR carrier.

Alternatively, the network device configures the first LTE carrier and the first NR carrier based on the second information and/or the third information, so that the first LTE carrier and the first NR carrier are spaced apart by at least one frequency domain unit in frequency domain. The frequency domain unit is related to the second information and/or the third information.

The foregoing configuration information may specifically include at least one of the following: frequency domain positions, quantities of resource blocks, or the like of the first LTE carrier and the first NR carrier. In addition, the frequency domain position of the first NR carrier in the configuration information is configured to be spaced apart from the frequency domain position of the first LTE carrier by at least one frequency domain unit, or the frequency domain position of the first LTE carrier in the configuration information is configured to be spaced apart from the frequency domain position of the first NR carrier by at least one frequency domain unit. For the frequency domain unit, refer to the foregoing descriptions. The frequency domain unit may specifically include any one of a resource block, a raster, a subcarrier spacing, or the like.

This step may also be understood as the second idea for resolving a problem in conventional technologies. In other words, when the network device configures carriers for the terminal device, the first LTE carrier and the first NR carrier are spaced apart by at least one frequency domain unit (which is alternatively understood as that the frequency domain positions of the first LTE carrier and the first NR carrier are configured to be non-contiguous). Therefore, the network device can configure, for the terminal device, that the terminal device supports non-contiguousness between an LTE carrier and an NR carrier in an intra-band EN-DC combination. For example, when configuring the first NR carrier, the network device moves the first NR carrier by at least one frequency domain unit toward a side away from the first LTE carrier. For another example, when configuring the first LTE carrier, the network device moves the LTE carrier by at least one frequency domain unit toward a side away from the first NR carrier.

For example, FIG. 5 shows an example of the configured first LTE carrier and the configured first NR carrier. It can be learned that when configuring the first LTE carrier and the first NR carrier, the network device moves at least one frequency domain unit to construct non-contiguousness. In this way, when the terminal device subsequently performs determining according to the rule, the terminal device determines that the configuration information delivered by the network device meets a non-contiguous capability supported by the terminal device, so that the terminal device accesses a network.

For example, the foregoing example of the second indication information is continued. The difference between the second guard band reported by the terminal device and the first guard band defined in the standard is one raster (for example, 100 kHz). When configuring the NR carrier, the network device may move the NR carrier by one raster in the direction away from the LTE carrier. That is, 100 kHz is subtracted from the guard band corresponding to the corresponding channel bandwidth.

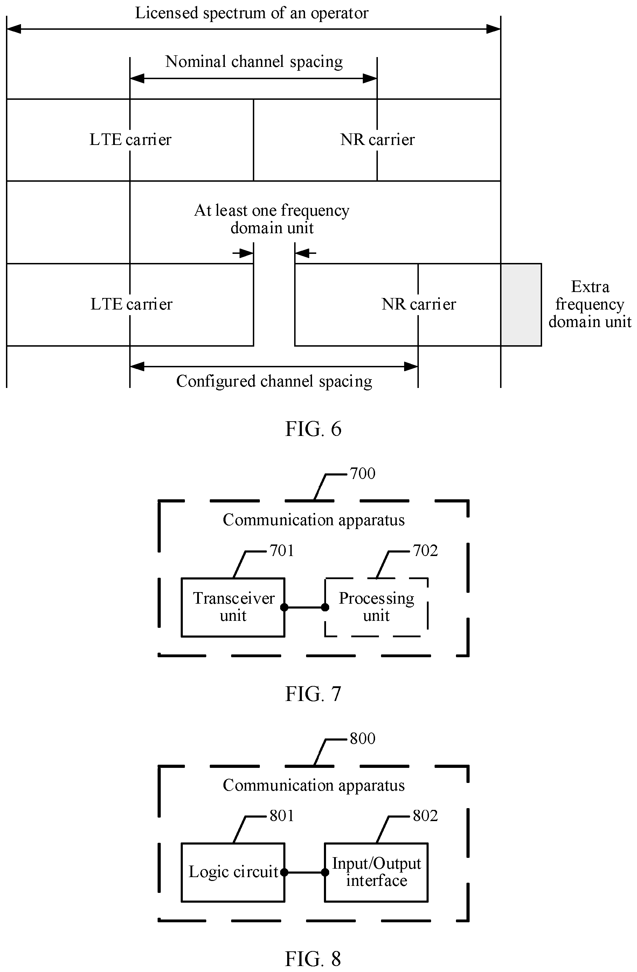

Further, in the foregoing configuration process of the network device, as shown in FIG. 6, because of movement by the at least one frequency domain unit, a frequency domain resource may exceed a licensed spectrum of an operator. That is, an extra frequency domain unit in FIG. 6 may cause interference that does not meet a protocol or a regulation to a spectrum outside a boundary.

To further resolve the foregoing technical problem, in the second idea of embodiments of this application, two solutions are provided.

In a first solution, to meet a radio frequency indicator, a second guard band of a special example is defined. For example, the terminal device may report a capability of supporting a smaller guard band (that is, the second guard band supported by the terminal device is less than the first guard band defined in the standard). This is a case of the second idea described in the foregoing step 402. Certainly, a manner in which the network device obtains the second guard band may be reporting by the terminal device, or may be delivering measurement data for measurement, or may be configuration or pre-configuration. This is not specifically limited herein.

In a second solution, the network device does not configure or schedule a resource block RB that exceeds a licensed spectrum boundary of an operator. Certainly, it may also be understood that a resource block RB adjacent to the licensed spectrum boundary of the operator is not configured or scheduled. That is, the resource block that exceeds the licensed spectrum boundary caused by movement by at least one frequency domain unit is not configured or scheduled for transmission.

For example, if step 402 and step 403 do not exist, the network device may determine the configuration information based on the first indication information. Specifically, the network device may configure, based on the first indication information reported by the terminal device, the frequency domain positions of the first LTE carrier and the first NR carrier to be non-contiguous.

For another example, if step 402 exists and step 403 does not exist, the network device may determine the configuration information based on the first indication information and the second indication information. Specifically, the network device may determine, based on the second indication information in step 402, the second guard band supported by the terminal device, and then calculate, by comparing the second guard band with the first guard band, a frequency domain unit that requires for movement when a carrier is set. In this case, it may also be understood that the terminal device indirectly indicates, to the network device by using the second indication information, the frequency domain unit that requires for movement when the carrier is set.

For another example, if step 402 and step 403 exist, the network device may determine the configuration information based on the first indication information, the second indication information, and the third indication information. Specifically, the network device may clearly determine, based on the third indication information in step 403, a frequency domain unit that requires for movement when a carrier is set. In this case, it may also be understood that the terminal device directly indicates, to the network device by using the third indication information, the frequency domain unit that requires for movement when the carrier is set.

Step 405: The terminal device accesses the network based on the configuration information.

After obtaining the configuration information, the terminal device may access the network based on the configuration information.

Optionally, after the terminal device receives the configuration information, the terminal device checks a nominal channel spacing and a channel spacing between the first LTE carrier and the first NR carrier of the terminal device. The rule includes: A channel spacing between an LTE carrier and an NR carrier in intra-band non-contiguous EN-DC is greater than a nominal channel spacing. If the channel spacing between the first LTE carrier and the first NR carrier is greater than the nominal channel spacing, the terminal device determines, according to the foregoing rule, that the configuration information delivered by the network device meets the non-contiguous capability supported by the terminal device, so that the terminal device accesses the network.

There are a plurality of cases for the method provided in this embodiment. For example, the method provided in this embodiment includes step 401, step 404, and step 405. For another example, the method provided in this embodiment includes step 401, step 402, step 404, and step 405. For another example, the method provided in this embodiment includes step 401, step 403, step 404, and step 405. For another example, the method provided in this embodiment includes step 401 to step 405.

In addition, step 403 may be dependent on step 402 (that is, when step 402 is included, step 403 may be further included). Step 403 may alternatively be independent of step 402 (that is, when step 402 is not included, step 403 may also be included).

In this embodiment of this application, when a network side configures carriers for the terminal device, the LTE carrier and the NR carrier are spaced apart by at least one frequency domain unit (which is alternatively understood as that the frequency domain positions of the first LTE carrier and the first NR carrier are configured to be non-contiguous). In this way, the network side can configure, for the terminal device, that the terminal device supports non-contiguousness between an LTE carrier and an NR carrier in an intra-band EN-DC combination. For example, when configuring the NR carrier, the network side moves the NR carrier by at least one frequency domain unit toward a side away from the LTE carrier. For another example, when configuring the LTE carrier, the network side moves the LTE carrier by at least one frequency domain unit toward a side away from the NR carrier. In addition, a frequency domain unit that exceeds the licensed spectrum boundary of the operator is not configured or not scheduled, or it is defined that the terminal device may support a special guard band less than a standard guard band (that is, the second guard band is less than the first guard band defined in the standard). In this way, interference that does not meet a protocol or a regulation to a spectrum outside a boundary, which is caused by an extra frequency domain unit resulting from configured non-contiguousness, is reduced.

The communication method in embodiments of this application is described above, and a communication apparatus in embodiments of this application is described below. FIG. 7 shows an embodiment of a communication apparatus 700 in an embodiment of this application. The communication apparatus 700 may implement a function of the terminal device or the network device in the foregoing method embodiments. Therefore, beneficial effects of the foregoing method embodiments can also be implemented. In this embodiment of this application, the communication apparatus 700 may be a communication apparatus, or may be an integrated circuit, an element, or the like in the communication apparatus, for example, a chip. The communication apparatus 700 includes a transceiver unit 701 and a processing unit 702. Alternatively, the communication apparatus 700 includes a transceiver unit 701.

In a possible implementation, the communication apparatus 700 is the terminal device in the embodiments shown in FIG. 1A to FIG. 3. In this case, functions of the units are as follows.

The transceiver unit 701 is configured to send first indication information. The first indication information indicates that the terminal device supports non-contiguousness between a first long term evolution LTE carrier and a first new radio NR carrier, and the first LTE carrier and the first NR carrier are two carriers in intra-band EN-DC.

The transceiver unit 701 is further configured to receive configuration information. The configuration information is used to configure the first LTE carrier and the first NR carrier.

The processing unit 702 is configured to access a network according to a first rule and the configuration information. The first rule includes: A nominal channel spacing is equal to a channel spacing between an LTE carrier and an NR carrier in intra-band non-contiguous EN-DC. The nominal channel spacing is a channel spacing between an LTE carrier and an NR carrier that are adjacent to each other in intra-band contiguous EN-DC.

Optionally, the first indication information further indicates that the terminal device supports contiguousness between the first LTE carrier and the first NR carrier.

Optionally, the first indication information further indicates a band identifier in an intra-band EN-DC scenario, a bandwidth level of the first LTE carrier, and a bandwidth level of the first NR carrier.

Optionally, the configuration information specifically includes frequency domain positions and quantities of resource blocks of the first LTE carrier and the first NR carrier.

Optionally, the first LTE carrier and the first NR carrier include a downlink carrier and/or an uplink carrier.

In this embodiment, operations performed by the units in the communication apparatus are similar to those in the descriptions of the terminal device in the embodiments shown in FIG. 1A to FIG. 3. Details are not described herein again.

In this embodiment, the first rule can enable a terminal device that only reports support for non-contiguousness between an LTE carrier and an NR carrier in intra-band EN-DC to access a network that only supports contiguousness between an LTE carrier and an NR carrier in intra-band EN-DC. The first rule is: A nominal channel spacing is equal to a channel spacing between an LTE carrier and an NR carrier in intra-band non-contiguous EN-DC. That is, contiguousness is used as a special example of non-contiguousness. This also meets a current actual requirement, that is, a non-contiguous capability of the terminal device should support both a contiguous network and a non-contiguous network.

In another possible implementation, the communication apparatus 700 is the network device in the embodiments shown in FIG. 1A to FIG. 3. In this case, functions of the units are as follows.

The transceiver unit 701 is configured to receive first indication information. The first indication information indicates that a terminal device supports non-contiguousness between a first long term evolution LTE carrier and a first new radio NR carrier, and the first LTE carrier and the first NR carrier are two carriers in intra-band EN-DC.

The transceiver unit 701 is further configured to send configuration information according to a first rule. The configuration information is used to configure the first LTE carrier and the first NR carrier. The first rule includes: A nominal channel spacing is equal to a channel spacing between an LTE carrier and an NR carrier in intra-band non-contiguous EN-DC. The nominal channel spacing is a channel spacing between an LTE carrier and an NR carrier that are adjacent to each other in intra-band contiguous EN-DC.

Optionally, the first indication information further indicates that the terminal device supports contiguousness between the first LTE carrier and the first NR carrier.

Optionally, the first indication information further indicates a band identifier in an intra-band EN-DC scenario, a bandwidth level of the first LTE carrier, and a bandwidth level of the first NR carrier.

Optionally, the configuration information specifically includes frequency domain positions and quantities of resource blocks of the first LTE carrier and the first NR carrier.

Optionally, the first LTE carrier and the first NR carrier include a downlink carrier and/or an uplink carrier.

In this embodiment, operations performed by the units in the communication apparatus are similar to those in the descriptions of the network device in the embodiments shown in FIG. 1A to FIG. 3. Details are not described herein again.

In this embodiment, the first rule can enable a terminal device that only reports support for non-contiguousness between an LTE carrier and an NR carrier in intra-band EN-DC to access a network that only supports contiguousness between an LTE carrier and an NR carrier in intra-band EN-DC. The first rule is: A nominal channel spacing is equal to a channel spacing between an LTE carrier and an NR carrier in intra-band non-contiguous EN-DC. That is, contiguousness is used as a special example of non-contiguousness. This also meets a current actual requirement, that is, a non-contiguous capability of the terminal device should support both a contiguous network and a non-contiguous network.

In another possible implementation, the communication apparatus 700 is the terminal device in the embodiments shown in FIG. 1A to FIG. 2 and FIG. 4 to FIG. 6. In this case, functions of the units are as follows.

The transceiver unit 701 is configured to send first indication information. The first indication information indicates that the terminal device supports non-contiguousness between a first long term evolution LTE carrier and a first new radio NR carrier, and the first LTE carrier and the first NR carrier are two carriers in intra-band EN-DC.

The transceiver unit 701 is further configured to receive configuration information. The configuration information is used to configure the first LTE carrier and the first NR carrier.

The processing unit 702 is configured to access a network based on the configuration information and a second guard band. The second guard band is a guard band supported by the terminal device. The second guard band is less than a first guard band, and the first guard band is a predefined guard band corresponding to any channel bandwidth and a subcarrier spacing.

Optionally, the transceiver unit 701 is further configured to send second indication information. The second indication information indicates the second guard band supported by the terminal device.

Optionally, a difference between the first guard band and the second guard band is at least one frequency domain unit, and the frequency domain unit includes any one of the following: a resource block, a raster, and a subcarrier spacing.

Optionally, the transceiver unit 701 is further configured to send third indication information. The third indication information indicates the frequency domain unit.

Optionally, a frequency domain position of the first NR carrier is configured to be spaced apart from a frequency domain position of the first LTE carrier by at least one frequency domain unit. For example, the frequency domain position of the first NR carrier is configured to be offset by at least one frequency domain unit toward a side away from the frequency domain position of the first LTE carrier. For another example, the frequency domain position of the first LTE carrier is configured to be offset by at least one frequency domain unit toward a side away from the frequency domain position of the first NR carrier.

Optionally, a resource block that exceeds a licensed spectrum boundary of an operator due to the at least one frequency domain unit is not configured or scheduled for transmission, or a resource block that is close to a licensed spectrum boundary of an operator is not configured or scheduled for transmission.

Optionally, the first indication information further indicates a band identifier in an intra-band EN-DC scenario, a bandwidth level of the first LTE carrier, and a bandwidth level of the first NR carrier.

Optionally, the configuration information specifically includes frequency domain positions and quantities of resource blocks of the first LTE carrier and the first NR carrier.

Optionally, the first LTE carrier and the first NR carrier include a downlink carrier and/or an uplink carrier.

In this embodiment, operations performed by the units in the communication apparatus are similar to those in the descriptions of the terminal device in the embodiments shown in FIG. 1A to FIG. 2 and FIG. 4 to FIG. 6. Details are not described herein again.

In this embodiment, a radio frequency indicator can be met by limiting the second guard band supported by the terminal device to being less than the predefined first guard band.

In another possible implementation, the communication apparatus 700 is the network device in the embodiments shown in FIG. 1A to FIG. 2 and FIG. 4 to FIG. 6. In this case, functions of the units are as follows.

The transceiver unit 701 is configured to receive first indication information. The first indication information indicates that a terminal device supports non-contiguousness between a first long term evolution LTE carrier and a first new radio NR carrier, and the first LTE carrier and the first NR carrier are two carriers in intra-band EN-DC.

The transceiver unit 701 is further configured to receive second indication information. The second indication information indicates a second guard band supported by the terminal device. The second guard band is less than a first guard band, and the first guard band is a predefined guard band corresponding to any channel bandwidth and a subcarrier spacing.

The transceiver unit 701 is further configured to send configuration information. The configuration information is used to configure the first LTE carrier and the first NR carrier. The configuration information and the second guard band are used by the terminal device to access a network.

Optionally, a difference between the first guard band and the second guard band is at least one frequency domain unit, and the frequency domain unit includes any one of the following: a resource block, a raster, and a subcarrier spacing.

Optionally, the transceiver unit 701 is further configured to receive third indication information. The third indication information indicates the frequency domain unit.

Optionally, a frequency domain position of the first NR carrier is configured to be spaced apart from a frequency domain position of the first LTE carrier by at least one frequency domain unit. For example, the frequency domain position of the first NR carrier is configured to be offset by at least one frequency domain unit toward a side away from the frequency domain position of the first LTE carrier. For another example, the frequency domain position of the first LTE carrier is configured to be offset by at least one frequency domain unit toward a side away from the frequency domain position of the first NR carrier.

Optionally, a resource block that exceeds a licensed spectrum boundary of an operator due to the at least one frequency domain unit is not configured or scheduled for transmission, or a resource block that is close to a licensed spectrum boundary of an operator is not configured or scheduled for transmission.

Optionally, the first indication information further indicates a band identifier in an intra-band EN-DC scenario, a bandwidth level of the first LTE carrier, and a bandwidth level of the first NR carrier.

Optionally, the configuration information specifically includes frequency domain positions and quantities of resource blocks of the first LTE carrier and the first NR carrier.

Optionally, the first LTE carrier and the first NR carrier include a downlink carrier and/or an uplink carrier.

In this embodiment, operations performed by the units in the communication apparatus are similar to those in the descriptions of the network device in the embodiments shown in FIG. 1A to FIG. 2 and FIG. 4 to FIG. 6. Details are not described herein again.

In this embodiment, the network device determines, by receiving the second indication information, that the second guard band supported by the terminal device is less than the predefined first guard band, so that a radio frequency indicator can be met.

FIG. 8 is another diagram of a structure of a communication apparatus 800 according to this application. The communication apparatus 800 includes a logic circuit 801 and an input/output interface 802. The communication apparatus 800 may be a chip or an integrated circuit.

The transceiver unit 701 shown in FIG. 7 may be a communication interface. The communication interface may be the input/output interface 802 in FIG. 8, and the input/output interface 802 may include an input interface and an output interface. Alternatively, the communication interface may be a transceiver circuit, and the transceiver circuit may include an input interface circuit and an output interface circuit. The processing unit 702 shown in FIG. 7 may be the logic circuit 801 in FIG. 8.

Optionally, when the communication apparatus is the terminal device in the foregoing embodiments, the input/output interface 802 is configured to send indication information and receive configuration information. The logic circuit 801 is configured to access a network.

Optionally, when the communication apparatus is the network device in the foregoing embodiments, the input/output interface 802 is configured to send configuration information and receive indication information.

The logic circuit 801 and the input/output interface 802 may further perform another step performed by the terminal device or the network device in any embodiment, and implement corresponding beneficial effects. Details are not described herein again.

Optionally, the logic circuit 801 may be a processing apparatus, and a part or all of functions of the processing apparatus may be implemented by software. A part or all of the functions of the processing apparatus may be implemented by software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only a processor. A memory configured to store a computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips, or one or more integrated circuits. For example, the processing apparatus may be one or more field programmable gate arrays (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a micro controller (micro controller unit, MCU), a programmable logic device (programmable logic device, PLD), or another integrated chip, or any combination of the foregoing chips or processors.

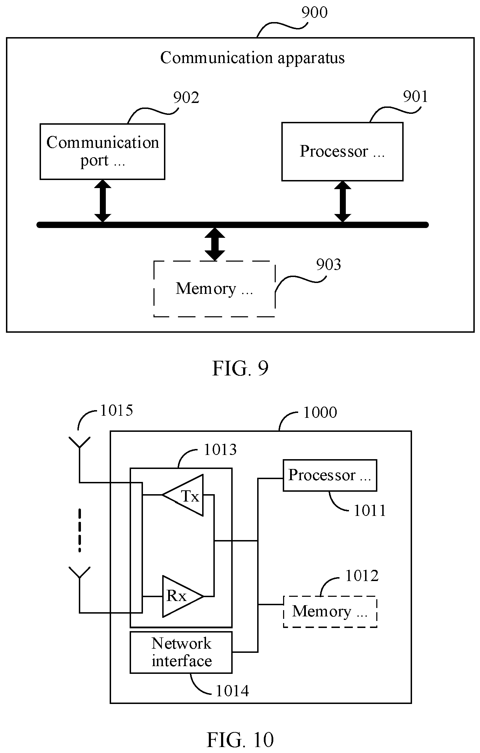

FIG. 9 shows a communication apparatus 900 in the foregoing embodiments according to an embodiment of this application. The communication apparatus 900 may be specifically the communication apparatus used as the terminal device in the foregoing embodiments.

In a diagram of a possible logic structure of the communication apparatus 900, the communication apparatus 900 may include, but is not limited to, at least one processor 901 and at least one communication port 902.

The transceiver unit 701 shown in FIG. 7 may be a communication interface. The communication interface may be the communication port 902 in FIG. 9, and the communication port 902 may include an input interface and an output interface. Alternatively, the communication port 902 may be a transceiver circuit, and the transceiver circuit may include an input interface circuit and an output interface circuit.

It may be understood that the communication port 902 in FIG. 9 may be configured to transmit indication information. For example, when the communication apparatus 900 is the terminal device in the foregoing embodiments, the communication port 902 is configured to send the indication information and receive configuration information. For another example, when the communication apparatus 900 is the network device in the foregoing embodiments, the communication port 902 is configured to receive the indication information and send the configuration information.

Optionally, the apparatus may further include at least one of a memory 903 and a bus. In this embodiment of this application, the at least one processor 901 is configured to perform control processing on an action of the communication apparatus 900.

In addition, the processor 901 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content described in this application. Alternatively, the processor may be a combination for implementing a computing function, for example, a combination of one or more microprocessors, or a combination of a digital signal processor and a microprocessor. A person skilled in the art may clearly understand that, for convenience and conciseness of description, for specific operating processes of the system, the apparatus, and the units described above, refer to a corresponding process in the foregoing method embodiments. Details are not described herein again.

It may be understood that a quantity of the components shown in FIG. 9 is not limited in this application. For example, there may be one or more processors 901, one or more communication ports 902, and one or more memories 903. This is not specifically limited herein.

It should be noted that, the communication apparatus 900 shown in FIG. 9 may be specifically configured to implement steps implemented by the terminal device in the foregoing method embodiments, and implement technical effects corresponding to the terminal device. For specific implementations of the communication apparatus shown in FIG. 9, refer to the description in the foregoing method embodiments. Details are not described herein again.

FIG. 10 is a diagram of a structure of a communication apparatus 1000 in the foregoing embodiments according to an embodiment of this application. The communication apparatus 1000 may be specifically a communication apparatus used as the network device in the foregoing embodiments. For a structure of the communication apparatus, refer to the structure shown in FIG. 10.

The communication apparatus 1000 includes at least one processor 1011 and at least one network interface 1014. Optionally, the communication apparatus further includes at least one memory 1012, at least one transceiver 1013, and one or more antennas 1015. The processor 1011, the memory 1012, the transceiver 1013, and the network interface 1014 are connected, for example, through a bus. In this embodiment of this application, the connection may include various interfaces, transmission lines, buses, or the like. This is not limited in this embodiment. The antenna 1015 is connected to the transceiver 1013. The network interface 1014 is configured to enable the communication apparatus to communicate with another communication device through a communication link. For example, the network interface 1014 may include a network interface between the communication apparatus and a core network device, for example, an S1 interface. The network interface may include a network interface between the communication apparatus and another communication apparatus (for example, another network device or core network device), for example, an X2 interface or an Xn interface.

The transceiver unit 701 shown in FIG. 7 may be a communication interface. The communication interface may be the network interface 1014 in FIG. 10, and the network interface 1014 may include an input interface and an output interface. Alternatively, the network interface 1014 may be a transceiver circuit, and the transceiver circuit may include an input interface circuit and an output interface circuit.

The processor 1011 is mainly configured to: process a communication protocol and communication data; control the entire communication apparatus, execute a software program, and process data of the software program, for example, is configured to support the communication apparatus in performing actions described in embodiments. The communication apparatus may include a baseband processor and a central processing unit. The baseband processor is mainly configured to process the communication protocol and the communication data. The central processing unit is mainly configured to: control the entire communication apparatus; execute the software program; and process the data of the software program. Functions of the baseband processor and the central processing unit may be integrated into the processor 1011 in FIG. 10. A person skilled in the art may understand that the baseband processor and the central processing unit may alternatively be independent processors, and are interconnected by using a technology such as a bus. A person skilled in the art may understand that the communication apparatus may include a plurality of baseband processors to adapt to different network standards, the communication apparatus may include a plurality of central processing units to enhance a processing capability thereof, and components in the communication apparatus may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and the data. The memory 1012 may be independent, and connected to the processor 1011. Optionally, the memory 1012 and the processor 1011 may be integrated together, for example, integrated in a chip. The memory 1012 can store program code for executing technical solutions of embodiments of this application, and execution of the program code is controlled by the processor 1011. Various types of computer program code executed may also be considered as a driver of the processor 1011.

FIG. 10 shows only one memory and one processor. In an actual communication apparatus, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 1013 may be configured to support receiving or sending of a radio frequency signal between the communication apparatus and a terminal, and the transceiver 1013 may be connected to the antenna 1015. The transceiver 1013 includes a transmitter Tx and a receiver Rx. Specifically, the one or more antennas 1015 may receive radio frequency signals. The receiver Rx of the transceiver 1013 is configured to: receive the radio frequency signal from the antenna, convert the radio frequency signal into a digital baseband signal or a digital intermediate frequency signal, and provide the digital baseband signal or the digital intermediate frequency signal to the processor 1011, so that the processor 1011 performs further processing, for example, demodulation processing and decoding processing, on the digital baseband signal or the digital intermediate frequency signal. In addition, the transmitter Tx of the transceiver 1013 is further configured to: receive a modulated digital baseband signal or a modulated digital intermediate frequency signal from the processor 1011, convert the modulated digital baseband signal or the modulated digital intermediate frequency signal into a radio frequency signal, and send the radio frequency signal through the one or more antennas 1015. Specifically, the receiver Rx may selectively perform one-stage or multi-stage down-conversion processing and analog-to-digital conversion processing on the radio frequency signal to obtain a digital baseband signal or a digital intermediate frequency signal, and an order of the down-conversion processing and the analog-to-digital conversion processing is adjustable. The transmitter Tx may selectively perform one-stage or multi-stage up-conversion processing and digital-to-analog conversion processing on the modulated digital baseband signal or the modulated digital intermediate frequency signal to obtain a radio frequency signal, and an order of the up-conversion processing and the digital-to-analog conversion processing is adjustable. The digital baseband signal and the digital intermediate frequency signal may be collectively referred to as digital signals.

The transceiver 1013 may also be referred to as a transceiver unit, a transceiver machine, a transceiver apparatus, or the like. Optionally, a component configured to implement a receiving function in the transceiver unit may be considered as a receiving unit, and a component configured to implement a sending function in the transceiver unit may be considered as a sending unit. That is, the transceiver unit includes the receiving unit and the sending unit. The receiving unit may also be referred to as a receiver, an input port, a receiving circuit, or the like. The sending unit may be referred to as a transmitter machine, a transmitter, a transmitting circuit, or the like.

It should be noted that the communication apparatus 1000 shown in FIG. 10 may be specifically configured to implement steps implemented by the network device in the foregoing method embodiments, and implement technical effects corresponding to the network device. For specific implementations of the communication apparatus 1000 shown in FIG. 10, refer to the description in the foregoing method embodiments. Details are not described herein again.

When the communication apparatus is a chip used in a terminal, the chip in the terminal implements a function of the terminal in the foregoing method embodiments. The chip in the terminal receives information from another module (for example, a radio frequency module or an antenna) in the terminal, where the information is sent by a base station to the terminal. Alternatively, the chip in the terminal sends information to another module (for example, a radio frequency module or an antenna) in the terminal, where the information is sent by the terminal to a base station. For example, when a first device is the terminal, that the terminal sends the indication information may be understood as a process in which the chip in the terminal outputs the indication information.

When the foregoing communication apparatus is a module used in the base station, the module in the base station implements a function of the base station in the foregoing method embodiments. The module in the base station receives information from another module (for example, a radio frequency module or an antenna) in the base station, where the information is sent by a terminal to the base station; or the module in the base station sends information to another module (for example, a radio frequency module or an antenna) in the base station, where the information is sent by the base station to a terminal. The module in the base station herein may be a baseband chip in the base station, or may be a DU or another module. The DU herein may be a DU in an open radio access network (open radio access network, O-RAN) architecture. For example, when the network device is the base station, that the base station sends the indication information may be understood as a process in which a chip of the base station outputs the indication information.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be located in an ASIC. In addition, the ASIC may be located in the base station or the terminal. Certainly, the processor and the storage medium may exist in the base station or the terminal as discrete components.

All or a part of the foregoing embodiments may be implemented by using software, hardware, firmware, or any combination thereof. When the foregoing embodiments are implemented by using software, all or a part of the foregoing embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, a computer, a server, or a data center to another website, another computer, another server, or another data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

## Claims

1. A communication method, wherein the method comprises:
sending first indication information, wherein the first indication information indicates that a terminal device supports non-contiguousness between a first long term evolution LTE carrier and a first new radio NR carrier, and the first LTE carrier and the first NR carrier are two carriers in intra-band EN-DC;
receiving configuration information, wherein the configuration information is used to configure the first LTE carrier and the first NR carrier; and
accessing a network according to a first rule and the configuration information, wherein the first rule comprises: A nominal channel spacing is equal to a channel spacing between an LTE carrier and an NR carrier in intra-band non-contiguous EN-DC, and the nominal channel spacing is a channel spacing between an LTE carrier and an NR carrier that are adjacent to each other in intra-band contiguous EN-DC.

2. The method according to claim 1, wherein the first indication information further indicates that the terminal device supports contiguousness between the first LTE carrier and the first NR carrier.

3. A communication method, wherein the method comprises:
receiving first indication information, wherein the first indication information indicates that a terminal device supports non-contiguousness between a first long term evolution LTE carrier and a first new radio NR carrier, and the first LTE carrier and the first NR carrier are two carriers in intra-band EN-DC; and
sending configuration information according to a first rule, wherein the configuration information is used to configure the first LTE carrier and the first NR carrier, the first rule comprises: A nominal channel spacing is equal to a channel spacing between an LTE carrier and an NR carrier in intra-band non-contiguous EN-DC, and the nominal channel spacing is a channel spacing between an LTE carrier and an NR carrier that are adjacent to each other in intra-band contiguous EN-DC.

4. The method according to claim 3, wherein the first indication information further indicates that the terminal device supports contiguousness between the first LTE carrier and the first NR carrier.

5. A communication method, wherein the method comprises:
sending first indication information, wherein the first indication information indicates that a terminal device supports non-contiguousness between a first long term evolution LTE carrier and a first new radio NR carrier, and the first LTE carrier and the first NR carrier are two carriers in intra-band EN-DC;
receiving configuration information, wherein the configuration information is used to configure the first LTE carrier and the first NR carrier; and
accessing a network based on the configuration information and a second guard band, wherein the second guard band is a guard band supported by the terminal device, the second guard band is less than a first guard band, and the first guard band is a predefined guard band corresponding to any channel bandwidth and a subcarrier spacing.

6. The method according to claim 5, wherein the method further comprises:
sending the second indication information, wherein the second indication information indicates the second guard band supported by the terminal device.

7. The method according to claim 5 or 6, wherein a difference between the first guard band and the second guard band is at least one frequency domain unit, and the frequency domain unit comprises any one of the following: a resource block, a raster, and a subcarrier spacing.

8. The method according to claim 7, wherein the method further comprises:
sending third indication information, wherein the third indication information indicates the frequency domain unit.

9. A communication method, wherein the method comprises:
receiving first indication information, wherein the first indication information indicates that a terminal device supports non-contiguousness between a first long term evolution LTE carrier and a first new radio NR carrier, and the first LTE carrier and the first NR carrier are two carriers in intra-band EN-DC; and
receiving second indication information, wherein the second indication information indicates a second guard band supported by the terminal device, the second guard band is less than a first guard band, and the first guard band is a predefined guard band corresponding to any channel bandwidth and a subcarrier spacing; and
sending configuration information, wherein the configuration information is used to configure the first LTE carrier and the first NR carrier, and the configuration information and the second guard band are used by the terminal device to access a network.

10. The method according to claim 9, wherein a difference between the first guard band and the second guard band is at least one frequency domain unit, and the frequency domain unit comprises any one of the following: a resource block, a raster, and a subcarrier spacing.

11. The method according to claim 9 or 10, wherein the method further comprises:
receiving third indication information, wherein the third indication information indicates the frequency domain unit.

12. A communication apparatus, wherein the communication apparatus comprises a processing unit and a transceiver unit; and
the processing unit and the transceiver unit are configured to perform the method according to any one of claims 1 to 11.

13. A communication apparatus, comprising at least one processor, wherein the at least one processor is coupled to at least one memory, and the at least one processor is configured to perform the method according to any one of claims 1 to 11.

14. A chip or a chip system, wherein the chip or the chip system is configured to perform the method according to any one of claims 1 to 11.

15. A communication system, comprising a communication apparatus configured to perform the method according to either of claims 1 and 2, and a communication apparatus configured to perform the method according to either of claims 3 and 4, or comprising a communication apparatus configured to perform the method according to any one of claims 5 to 8, and a communication apparatus configured to perform the method according to any one of claims 9 to 11.

16. A readable storage medium, wherein the storage medium has a computer program or instructions stored therein, and the computer program or the instructions, when executed by a communication apparatus, implement the method according to any one of claims 1 to 11.

17. A computer program product, comprising instructions, wherein the instructions, when run on a computer, cause the computer to perform the method according to any one of claims 1 to 11.
